# EUROPEAN PATENT APPLICATION

(11) **EP 0 676 134 A1**
(43) Date of publication of application: **11.10.1995**
(21) Application number: 95200380.4
(22) Date of filing: 17.02.1995
(51) Int. Cl.: A01K 1/01

(54) **A method for discharging manure from a stable floor and a stable suitable for carrying out such a method**

(30) Priority: 11.04.1994 NL 9400566
(71) Applicant: Vromans, Josephus Antonius Gijsbertus Maria, NL-5131 RG Alphen (NL)
(72) Inventor: Vromans, Josephus Antonius Gijsbertus Maria, NL-5131 RG Alphen (NL)
(74) Representative: Vollebregt, Cornelis Jacobus, Ir.

(57) **Abstract**

The invention relates to a method for discharging manure from a stable floor, whereby the manure is discharged, via a gutter (8) provided along the stable floor, to a storage space (3) under the stable floor. The manure is pushed from the gutter, under a partition means projecting into the gutter, to the storage space located under the stable floor by at least one displacement means (2) being movable through the gutter (8). To that end a stable comprises a floor on which animals can be housed, and a manure storage space (3) located under the floor. A gutter (8) for the discharge of manure, which extends along the floor, is provided near one side of the floor, which gutter (8) is divided by a partition means (10) into two parts extending in the longitudinal direction of the gutter. The manure can flow directly from the floor into a first part of the gutter, via the passages into the second part of the gutter and from the second part into the storage space (3).

## Description

The invention relates to a method for discharging manure from a stable floor, whereby the manure is discharged, via a gutter provided along the stable floor, to a storage space under the stable floor.

Stable floors and manure-discharging systems for discharging animal manure to a so-called manure pit under the stable floor are known, whereby openings are provided in the stable floors, through which said manure is discharged to the manure pit. The problem arises thereby that as a result of chemical reactions ammonia gas is formed in the manure pit after some time, which freely finds its way into the atmosphere through the open parts of the stable floor, which constitutes a burden to the environment and causes odour nuisance.

According to the invention the manure is pushed from the gutter, under a partition means projecting into the gutter, to the storage space located under the stable floor by at least one displacement means being movable through the gutter.

According to another aspect of the invention the above-described method can be efficiently carried out in a stable comprising a floor on which animals can be housed and a manure storage space located under said floor, whereby according to the invention a gutter for the discharge of manure, which extends along the floor, is provided near one side of the floor, said gutter being divided, by a partition means projecting into the gutter, into two parts extending in the longitudinal direction of the gutter, which are in communication with each other via one or more passages bounded by said partition means, in such a manner that the manure can flow directly from the floor into a first part of the gutter, via the passages into the second part of the gutter and from said second part into the storage space.

When using this method a kind of siphon sealing is used, whereby the passage(s) for the manure is (are) constructed in such a manner, that a siphon system is formed between the upper side of the stable floor and the manure pit, as a result of which ammonia gases are prevented from escaping from the storage space into the atmosphere. The result of this is that the emission of ammonia gas is drastically reduced, whereby it is possible to comply with the environmental regulations with regard to the emission of ammonia gas, which will be stricter in the future.

The invention will be explained in more detail hereafter with reference to embodiments of a stable floor and a manure sweeping device according to the invention, which are diagrammatically illustrated in the accompanying Figures.

Figure 1 is a plan view of one embodiment of a stable floor with a manure sweeping device provided thereon.

Figure 2 is a side view of Figure 1.

Figure 3 is a sectional view of a part of Figure 2, whereby some parts of the device have been left out for easy reference.

Figure 4 is a larger-scale view of the encircled part A of Figure 1, seen in cross-sectional view.

Figure 5 is a sectional view corresponding with Figure 4, in a different operating position.

Figure 6 is a bottom view of a stable floor plate according to a first embodiment.

Figure 7 is a sectional view of Figure 6, along the line VII-VII in Figure 6.

Figure 8 is a sectional view of Figure 6, along the line VIII-VIII in Figure 6.

Figure 9 is a bottom view of a stable floor plate according to a second embodiment.

Figure 10 is a sectional view of Figure 9, along the line X - X in Figure 9.

Figure 11 is a sectional view of Figure 9, along the line XI - XI in Figure 9.

Figures 12 and 13 show further embodiments of displacement means.

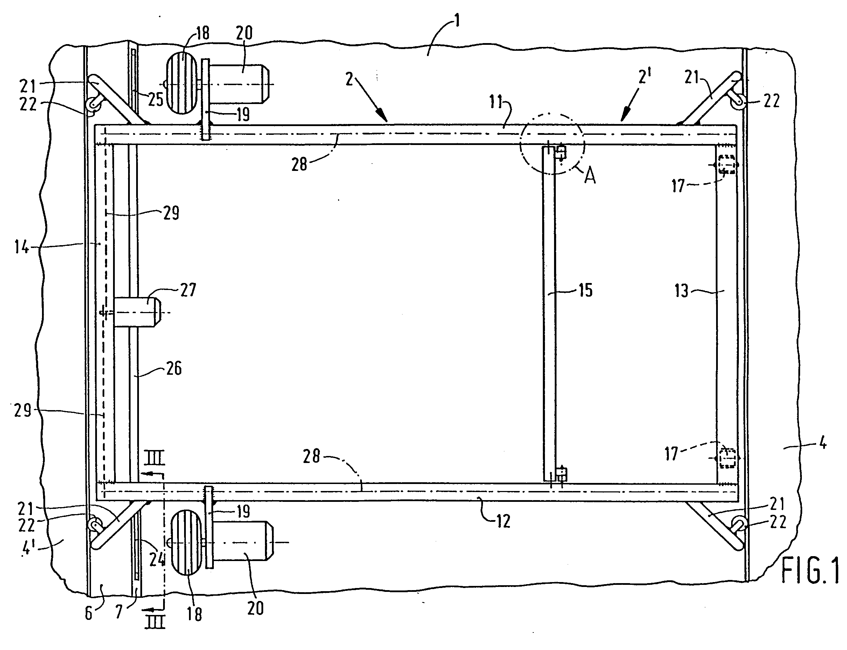

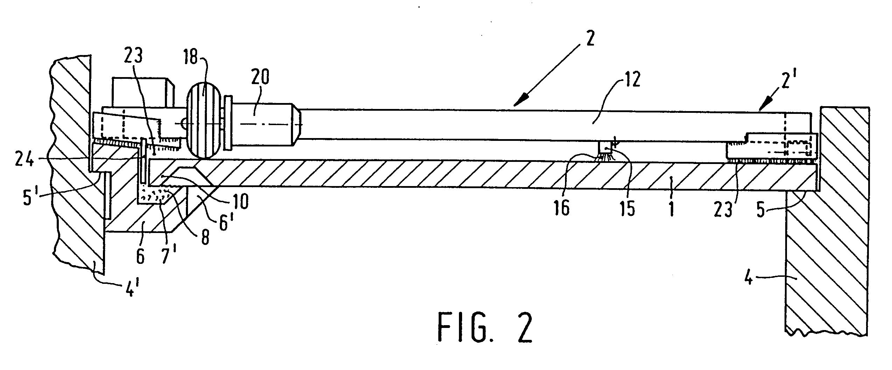

A stable floor is preferably built up of several stable floor plates 1 arranged in side-by-side relationship. As is illustrated in Figures 1 and 2, a manure sweeping device 2 is capable of movement over said stable floor plates in a manner yet to be described hereafter.

Located under the stable floor is a manure storage space or manure pit 3, which is bounded by the stable floor plates 1 at its upper side and by stable walls 4 and 4' on either side.

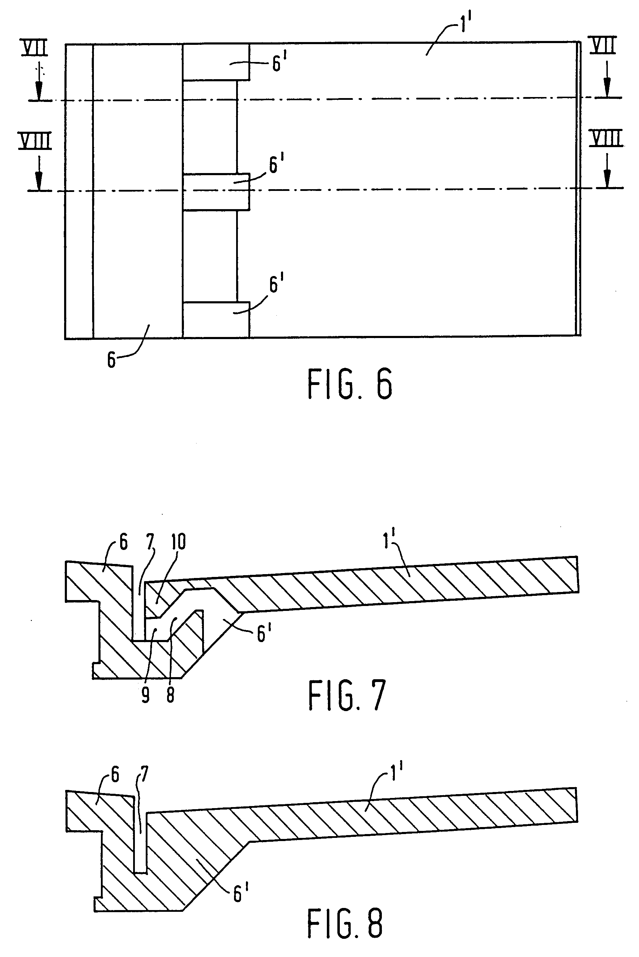

As is shown in Figures 1 and 2, in the embodiment shown in Figures 1 and 2 the stable floor plates, which are illustrated in more detail in Figures 6 - 8, rest on a flat part of the stable wall 4 near one end thereby, while they are supported on a flat part 5' of the stable wall 4' near their other end, by means of more or less Z-shaped beams 6 being integral with the stable floor plates.

The stable floor plates 1 forming the stable floor, which are arranged in side-by-side relationship, and the beams 6 being integral therewith, bound a trench 7 extending in the longitudinal direction of the stable, which is in communication with a gutter 8 provided in the upper side of the lower leg of the more or less Z-shaped beam 6.

Recesses 9 extending in the longitudinal direction of the stable are formed in the bottom side of the floor plates 1, in the part of the floor plates bounding the trench 7, said recesses being bounded by the ends of noses 10 forming the ends of the plates, which form partition means projecting some distance into the gutter 8, all this in such a manner that a kind of syphon construction is formed. The connection between the plate-shaped part 1' of the floor plate 1 and the Z-shaped beam 6 being integral therewith is thereby formed by means of a few ribs 6' extending perpendicularly to the longitudinal direction of the beam part, said ribs bounding the recesses 9.

As is furthermore shown in Figures 1 and 2 the manure sweeping device 2 comprises a trolley formed by the framework 2', which framework 2' is built up of two girders 11 and 12 extending transversely to the longitudinal direction of the stable floor, said girders near their ends being interconnected by means of girders 13 and 14 extending in the longitudinal direction of the stable floor.

A slide 15 is disposed between the girders 11 and 12 in the framework 2', said slide at its bottom side being provided with a brush 16.

The framework 2' is at one side supported by a few rollers 17, which are disposed near the ends of the girders 13, whilst at its other side the framework 2' is supported by a few wheels 18, which are secured to the girders 11 and 12 by means of plates 19. A driving motor 20 coupled to a respective wheel 18 is secured to each of said plates 19. The wheels 18 can be driven by means of the driving motors, so as to move the manure sweeping device 2 in the longitudinal direction of the stable.

Arms 21 are provided near the ends of the girders 11 and 12, on which arms guide rollers 22 cooperating with the walls 4 and 4' and brushes 23 extending at an angle of about 45° with respect to the walls are mounted.

As is shown in Figures 1 and 2 displacement means 24 and 25 extending into the trench 7 are provided at the bottom sides of the girders 11 and 12, near the trench 7, the lower boundary edges of said displacement means being curved. In the illustrated embodiment said displacement means consist of curved bars, but it is also conceivable to use for example plate-shaped displacement means.

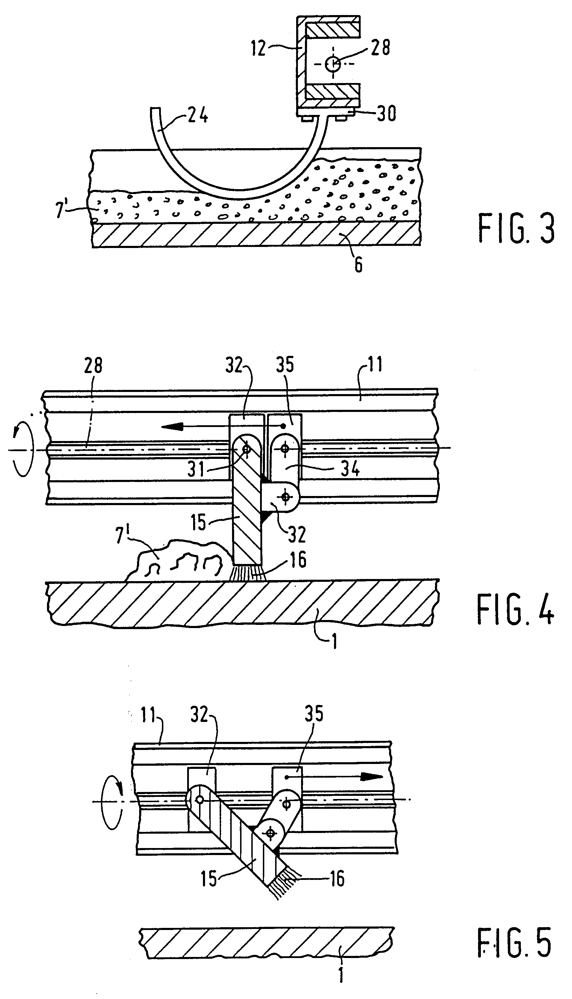

As appears in particular from Figure 3 the displacement means is secured to the bottom side of the girder 11 or 12 by means of a connecting plate 30.

As is apparent in particular from Figure 1, a cross girder 26 is furthermore provided between the girders 11 and 12, near one end of the framework 2', to which a driving motor 27 for the slide 15 is attached. The driving motor 27 is thereby connected, via chains 29, to screw spindles 28 extending parallel to the girders 11 and 12.

As is furthermore shown in Figures 4 and 5 the slide 15 is secured, by means of a pivot pin 31 extending horizontally and perpendicularly to the screw spindles 28, to blocks 32 provided on said spindles and being freely movable over said spindles. Furthermore ears 33 are secured to said slide, to which ears ends of coupling pieces 34 are pivotally connected. The other ends of said coupling pieces 34 are pivotally connected to blocks 35, which are provided with threaded holes, into which the screw spindles 28 are screwed.

When the stable floor must be cleaned the manure sweeping device 2 will for example initially take up a starting position above a part to be cleaned, near the girder 13, at the high side of the stable floor, which preferably slopes down a little in the direction of the gutter 8. The driving motor 27 for the slide 15 is then put into operation, which motor drives the screw spindles 28 via the chains 29, as a result of which the slide 15 between the girders 11 and 12 is moved in the direction of the trench 7, while the brush 16 thereby abuts against the stable floor in folded-down condition, thus pushing manure 7' into the trench 7. When the slide 15 has reached the end of the stable floor located near the trench 7, the driving motors 20 are put into operation so as to drive the wheels 18, as a result of which the manure sweeping device 2 is moved in the longitudinal direction of the stable and the displacement means 24 and 25 are moved through the trench 7. The manure 7' is thereby pushed from the gutter, under the noses 10 forming a partition means extending into the gutter 8, into the manure pit by the displacement means 24 and 25.

While the manure sweeping device is thus being moved in the longitudinal direction of the stable floor, the slide 15 is at the same time moved in a direction away from the trench 7 by reversing the direction of rotation of the screw spindles 28, and moved back again to a position near the girder 13. When the direction of rotation of the screw spindles is reversed the blocks 35 are first moved some distance before the blocks 32 are carried along, as a result of which the slide 15 and the brush 16 are folded up into a direction away from the stable floor via the coupling pieces 34 and the ears 33.

Since the bottom end of the nose 10 is positioned lower than the edge of the gutter 8 over which the manure flows into the pit, a small amount of manure will remain behind in the gutter 8 at all times, so that the manure pit will not be in open communication with the atmosphere.

Spray means (not shown), which are to be connected to the water supply, may be mounted on the frame of the manure sweeping device 2, so as to contribute towards the cleaning of the stable floor by hosing it down with water.

Of course variations and/or additions to the above-described embodiment are possible.

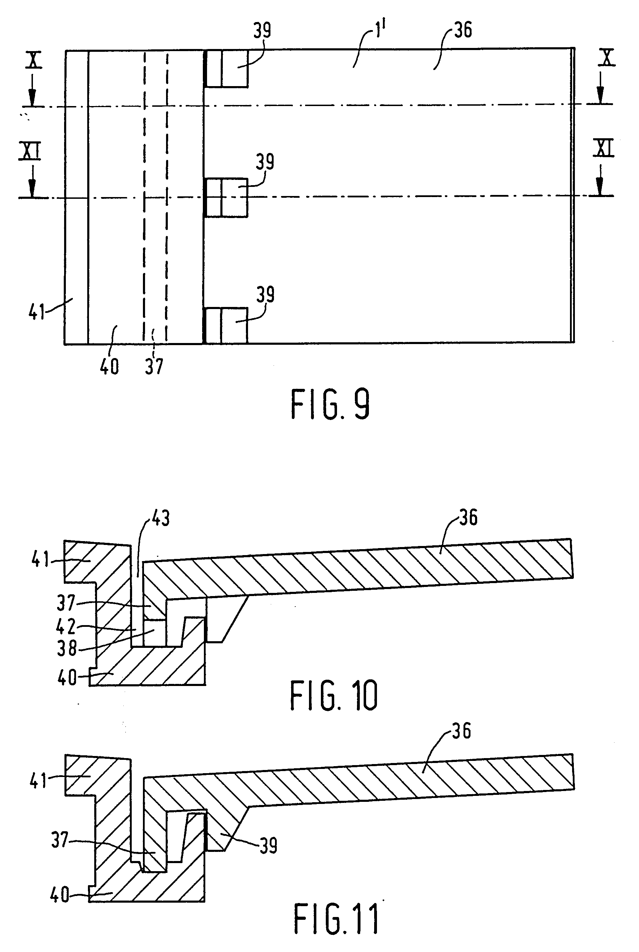

Thus figures 9 - 11 show a second embodiment of a stable floor plate 36, which is at one end provided with a downwardly projecting nose 37, in which holes 38 are provided in regularly spaced-apart relationship. Downwardly extending ears 39 are secured to the plate at some distance from the nose 37. The floor plate 36 is supported, via the nose 37, on a beam 40 having a more or less U-shaped section, which is provided with a projecting rib 41, by means of which the beam 40 can be supported on a stable wall, in a similar manner as described above for the beam 6.

From the Figures it will be apparent that the projecting nose 37 divides the gutter 42 located between the legs of the U-shaped beam 40 into two parts again, which parts are in communication with each other through the holes 38, while a trench 43 is present between the nose 37 and the nearby leg of the beam 40, to allow a push means to pass. Also in this embodiment the manure can be pushed from the gutter 42 in a similar manner as described above, whereby the gutter 42 with the nose 37 projecting into the gutter functions as a kind of syphon again.

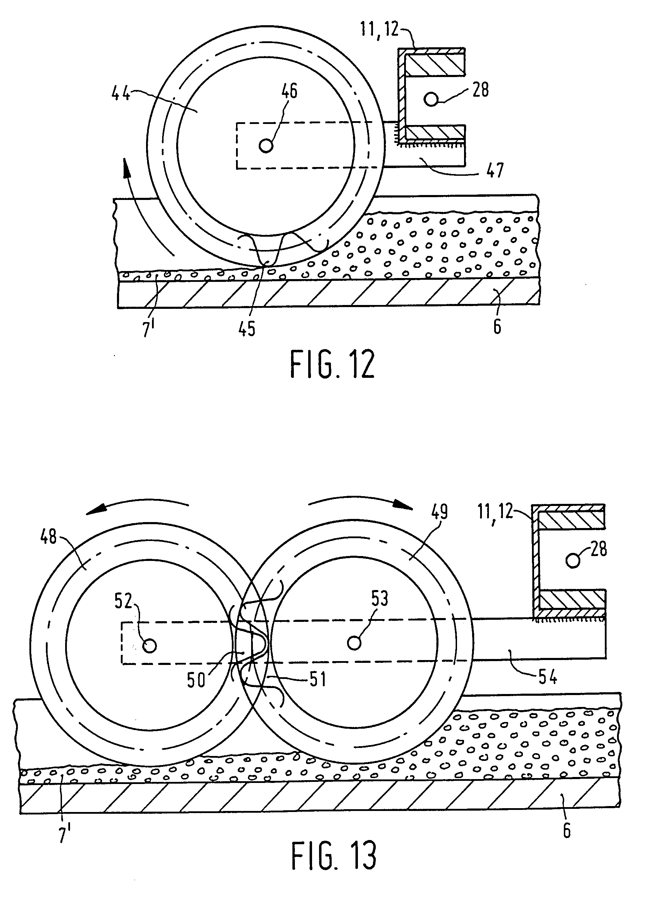

Figure 12 shows a further embodiment of a displacement means 44, which is made in the form of a circular disc provided with teeth 45 at its outer circumferential edge. The disc 44 is rotatably mounted, by means of a stud 46, on the end of a connecting arm 47 secured to the bottom side of a girder 11 or 12.

Figure 13 shows yet another embodiment of a displacement means built up of circular discs 48 and 49, which are circumferentially provided with teeth 50 and 51 respectively, which are in engagement with each other.

The discs 48 and 49 are thereby coupled, being capable of rotation about studs 52 and 53 respectively, to an arm 54 secured to a girder 11 or 12.

It will be apparent that when the device is being used the disc 44 or the discs 48 and 48 will move through the gutter 7 in a similar manner as described above with regard to the displacement means 24 and 25, with the understanding that for an effective operation of said displacement means the disc 44, 48 and 49 will preferably be driven by a driving motor (not shown) coupled to the discs, thereby displacing manure 7' from the gutter 7 into the manure pit 3.

## Claims

1. A method for discharging manure from a stable floor, whereby the manure is discharged, via a gutter provided along the stable floor, to a storage space under the stable floor, characterized in that said manure is pushed from the gutter, under a partition means projecting into the gutter, to the storage space located under the stable floor by at least one displacement means being movable through the gutter.

2. A stable comprising a floor on which animals can be housed and a manure storage space located under said floor, characterized in that a gutter extending along the floor for the discharge of manure is provided near one side of the floor, said gutter being divided, by a partition means projecting into the gutter, into two parts extending in the longitudinal direction of the gutter, which are in communication with each other via one or more passages bounded by said partition means, in such a manner that the manure can flow directly from the floor into a first part of the gutter, via the passages into the second part of the gutter and from said second part into the storage space.

3. A stable according to claim 2, characterized in that a trolley is provided, which is capable of movement across the floor, said trolley being provided with at least one displacement means, which extends into the first part of the gutter.

4. A stable according to claim 3, characterized in that the bottom side of said displacement means is curved.

5. A stable according to claim 3 or 4, characterized in that said displacement means is a curved bar.

6. A stable according to claim 2, 3 or 4, characterized in that said displacement means comprises a circular disc, which is circumferentially provided with teeth.

7. A stable according to claim 2, 3, 4 or 6, characterized in that said displacement means consists of one or more circular discs, which are circumferentially provided with teeth, whereby the toothed discs are in engagement with each other.

8. A stable according to claim 7, characterized in that said trolley is provided with at least one sliding means, which can be moved across the floor in a direction transversely to the longitudinal direction of the gutter.

9. A stable according to claim 8, characterized in that a brush means is attached to the bottom side of said sliding means.

10. A stable according to claim 2 - 9, characterized in that said sliding means can be driven by means of a screw spindle, which can be rotated by means of a motor mounted on said trolley.

11. A stable according to claim 8 - 10, characterized in that means are provided by which said sliding means can be moved upwards with respect to the floor.

12. A stable according to claim 11, characterized in that the means for moving said brush means upwards comprise a first block, which can move freely over said screw spindle, as well as a second block, which is provided with a hole provided with threads capable of receiving said screw spindle, whereby said brush means is pivotally coupled to said first block and is connected to said second block via a pivotal coupling rod.

13. A stable according to claim 2 - 12, characterized in that said trolley is provided with at least one driving motor for driving a wheel supporting the trolley.

14. A stable according to any one of the preceding claims 2 - 13, characterized in that rollers are provided near each corner of the trolley, said rollers guiding the trolley along stable walls.

15. A stable according to any one of the preceding claims 2 - 14, characterized in that said trolley is fitted with one or more brush means, which are disposed near each corner of said framework.

16. A stable according to any one of the claims 2 - 15, characterized in that the stable floor slopes down towards the gutter at a small angle.

17. A stable according to any one of the preceding claims 2 - 16, characterized in that near the gutter the stable floor is near one side provided with a nose projecting into said gutter, and a recess is provided in the stable floor, at the side of the nose turned towards the opposite side of the stable floor, said recess being positioned above and higher than the boundary edge of the gutter located therebelow, whilst said boundary edge of the gutter is positioned higher than the bottom end of the nose projecting into the gutter.
